# EUROPEAN PATENT APPLICATION

(11) **EP 4 712 490 A1**
(43) Date of publication of application: **18.03.2026**
(21) Application number: 24860233.6
(22) Date of filing: 06.08.2024
(51) Int. Cl.: H04N 21/4363, H04N 21/436, H04N 21/442, H04N 21/439

(54) **ELECTRONIC DEVICE AND AUDIO DATA TRANSMISSION METHOD THEREOF**

(30) Priority: 30.08.2023 KR 20230114962; 08.11.2023 KR 20230153804
(71) Applicant: Samsung Electronics Co., Ltd., Suwon-si, Gyeonggi-do 16677 (KR)
(72) Inventor: HAN, Yunkyoung, Suwon-si Gyeonggi-do 16677 (KR)
(74) Representative: Appleyard Lees IP LLP
(86) International application number: PCT/KR2024/011628
(87) International publication number: WO 2025/048312

(57) **Abstract**

An electronic device is disclosed. The present electronic device comprises: a first communication interface; a second communication interface for wirelessly communicating with a display apparatus; and one or more processors that, when audio data is received from the display apparatus through the second communication interface, transmit the audio data to a sound output apparatus through the first communication interface. A format of the audio data received from the display apparatus is determined on the basis of a network state between the display apparatus and the electronic device. The one or more processors change the format of the audio data when the format of the audio data received from the display apparatus is different from a format for transmitting the audio data to the sound output apparatus, and transmit the audio data having the changed format to the sound output apparatus through the first communication interface.

## Description

### [Technical Field]

The disclosure relates to an electronic apparatus that outputs audio signals by using an audio output device, and an audio data transmission method thereof.

### [Background Art]

There is an increasing demand of users for being provided with high-definition images and high-quality sounds. With development of electronic technologies, display devices such as a TV, etc. are providing sounds to users by using audio output devices such as a sound bar, etc.

A display device may be connected to an audio output device through a separate electronic apparatus, and the display device may provide audio data to the audio output device through the electronic apparatus. Meanwhile, in case the display device and the electronic apparatus are connected wirelessly, transmission of audio data by the display device may be influenced by a situation of a wireless network.

### [Disclosure of Invention]

### [Solution to Problem]

An electronic apparatus according to an embodiment of the disclosure includes a first communication interface, a second communication interface for communicating with a display device wirelessly, and at least one processor. The at least one processor is configured to, based on receiving audio data from the display device through the second communication interface, transmit the audio data to an audio output device through the first communication interface. A format of the audio data received from the display device is determined based on a network state between the display device and the electronic apparatus. The at least one processor is configured to, based on the format of the audio data received from the display device being different from a format for transmitting the audio data to the audio output device, change the format of the audio data, and transmit the audio data wherein the format was changed to the audio output device through the first communication interface.

Also, the audio data received from the display device may include compressed audio data compressed by a first codec based on the network state between the display device and the electronic apparatus being a first state, and compressed audio data compressed by a second codec based on the network state between the display device and the electronic apparatus being a second state, and the first codec may be a codec that has a higher data rate than the second codec.

In addition, the format of the audio data transmitted to the audio output device may be a compressed format by the first codec. The at least one processor may, based on the audio data received from the display device including the audio data compressed by the first codec, transmit the audio data compressed by the first codec to the audio output device through the first communication interface, and based on the audio data received from the display device including the audio data compressed by the second codec, obtain audio data by decoding the audio data compressed by the second codec, compress the audio data by using the first codec, and transmit the audio data compressed by the first codec to the audio output device through the first communication interface.

Further, the first codec may be Metadata-enhanced Audio Transmission (MAT), and the second codec may be Dolby Digital Plus (DD+).

Also, the audio data received from the display device may include audio data generated based on a first sampling rate based on the network state between the display device and the electronic apparatus being a first state, and audio data generated based on a second sampling rate lower than the first sampling rate based on the network state between the display device and the electronic apparatus being a second state.

In addition, the format of the audio data transmitted to the audio output device may be an uncompressed format, and the at least one processor may, based on the audio data received from the display device including audio data generated based on the first sampling rate, transmit the audio data to the audio output device through the first communication interface, and based on the audio data received from the display device including audio data generated based on the second sampling rate, obtain audio data generated based on the first sampling rate by sampling the audio data based on the first sampling rate, and transmit the audio data generated based on the first sampling rate to the audio output device through the first communication interface.

Further, the format of the audio data transmitted to the audio output device may be set based on the user input, or set based on an audio processing method supported at the audio output device.

Also, the at least one processor may, based on the network state between the display device and the electronic apparatus being a second state, receive a control command from the display device through the second communication interface, and transmit audio data received from an external device to the audio output device through the first communication interface based on the control command. The audio data received from the external device may not be transmitted to the display device.

A method of transmitting audio data of an electronic apparatus according to an embodiment of the disclosure includes the steps of receiving audio data from a display device, and based on a format of audio data received from the display device being different from a format for transmitting the audio data to an audio output device, changing the format of the audio data, and transmitting the audio data wherein the format was changed to the audio output device. The format of the audio data received from the display device is determined based on a network state between the display device and the electronic apparatus.

In a non-transitory computer-readable medium storing computer instructions that, when executed by at least one processor of an electronic apparatus, cause the electronic apparatus perform operations according to an embodiment of the disclosure, the operations include the steps of receiving audio data from a display device, and based on a format of audio data received from the display device being different from a format for transmitting the audio data to an audio output device, changing the format of the audio data, and transmitting the audio data wherein the format was changed to the audio output device. The format of the audio data received from the display device is determined based on a network state between the display device and the electronic apparatus.

### [Brief Description of Drawings]

FIG. 1 is a diagram for illustrating an audio output system according to an embodiment of the disclosure;
FIG. 2A is a block diagram for illustrating a configuration of a display device according to an embodiment of the disclosure;
FIG. 2B is a block diagram for illustrating a configuration of a display device according to an embodiment of the disclosure;
FIG. 3A is a block diagram for illustrating a configuration of an electronic apparatus according to an embodiment of the disclosure;
FIG. 3B is a block diagram for illustrating a configuration of an electronic apparatus according to an embodiment of the disclosure;
FIG. 4, FIG. 5, and FIG. 6 are diagrams for illustrating a method for a display device to transmit audio data to an electronic apparatus according to an embodiment of the disclosure;
FIG. 7A, FIG. 7B, FIG. 8A, FIG. 8B, and FIG. 9 are diagrams for illustrating a method for an electronic apparatus to transmit audio data to an electronic apparatus according to an embodiment of the disclosure;
FIG. 10 is a flow chart for illustrating a method of transmitting audio data of a display device according to an embodiment of the disclosure; and
FIG. 11 is a flow chart for illustrating a method of transmitting audio data of an electronic apparatus according to an embodiment of the disclosure.

### [Mode for Invention]

Various embodiments of the disclosure and terms used in the embodiments are not for limiting the technical characteristics described in the disclosure to specific embodiments, but they should be interpreted to include various modifications, equivalents, or alternatives of the embodiments.

Also, with respect to the detailed description of the drawings, similar or related components may be designated by similar reference numerals.

In addition, a singular form of a noun corresponding to an item may include the one item or a plurality of the items, unless instructed obviously differently in the related context.

Further, in the disclosure, each of the phrases such as "A or B," "at least one of A and B," "at least one of A or B," "A, B or C," "at least one of A, B and C," and "at least one of A, B, or C" may include any one of the items listed together with the phrase among the above phrases, or all possible combinations thereof. For example, "A or B," "at least one of A and B," or "at least one of A or B" may refer to all of the following cases: (1) including at least one A, (2) including at least one B, or (3) including at least one A and at least one B.

Also, terms such as "the first" and "the second" may be used just to distinguish one element from another element, and do not limit the elements in another aspect (e.g.: importance or order).

Meanwhile, in case it is mentioned that one (e.g.: the first) element is "coupled" or "connected" with another (e.g.: the second) element together with the terms "operatively" or "communicatively," or without such terms, it means that the one element may be connected with the another element directly (e.g.: via wire), wirelessly, or through a third element.

Also, terms such as "include" or "have" should be construed as designating that there are such characteristics, numbers, steps, operations, elements, components or a combination thereof described in the specification, but not as excluding in advance the existence or possibility of adding one or more of other characteristics, numbers, steps, operations, elements, components or a combination thereof.

In addition, in case it is mentioned that one element is "connected with," "combined with," "supported by," or "contacted with" another element not only includes a case wherein the elements are directly connected, combined, supported, or contacted, but also a case wherein the elements are indirectly connected, combined, supported, or contacted through a third element.

Further, the description in the disclosure that one element is "on top of" another element not only includes a case wherein the one element contacts the another element, but also a case wherein still another element exists between the two elements.

Also, the term "and/or" includes a combination of a plurality of related components described, or any one component among the plurality of related components described.

In addition, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, "a module" or "a unit" may perform at least one function or operation, and may be implemented as hardware or software, or as a combination of hardware and software. Also, a plurality of "modules" or "units" may be integrated into at least one module and implemented as at least one processor (not shown), excluding "a module" or "a unit" that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, an embodiment of the disclosure will be described in more detail with reference to the accompanying drawings.

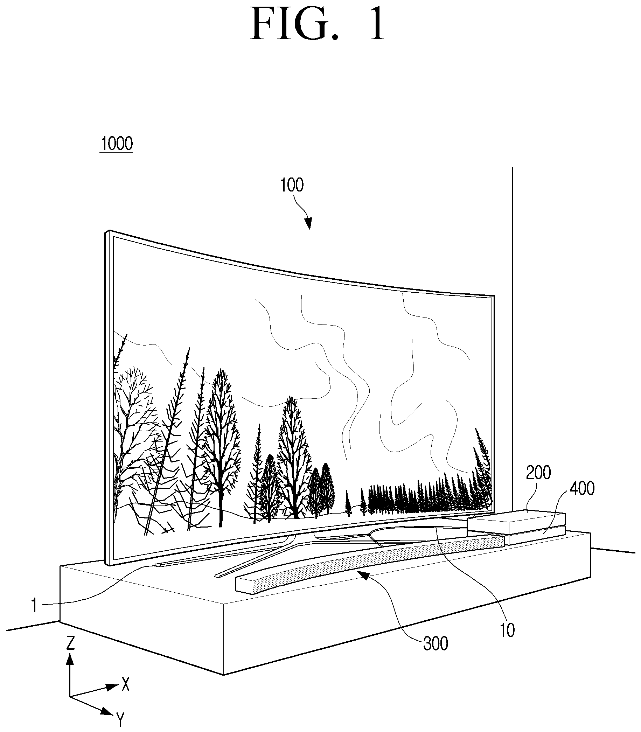

FIG. 1 is a diagram for illustrating an audio output system according to an embodiment of the disclosure.

Referring to FIG. 1, an audio output system 1000 includes a display device 100, an electronic apparatus 200, an audio output device 300, and an external device 400.

The display device 100 may display images. For example, the display device 100 may be implemented as a TV. According to an embodiment, the display device 100 may be a light emitting diode (LED) TV, an organic light emitting diode (OLED) TV, a quantum dot light emitting diode (QLED) TV, a quantum dot TV, or a digital signage device (e.g.: one LED display module or LED display modules arranged in a matrix form). Also, the display device 100 may be a TV having a flat screen, a curved TV having a screen of a fixed curvature, or a variable curvature TV wherein the curvature can be changed.

As illustrated in FIG. 1, the display device 100 may be supported by a stand 1. However, the disclosure is not limited to this example, and the display device 100 may be fixed on the wall by a wall mount unit (not shown).

In the aforementioned example, it was explained that the display device 100 is implemented as a TV, but the disclosure is not limited to this example. The display device 100 may be implemented as various types of devices such as a beam projector, a monitor, etc.

The display device 100 may display an image on a display of the display device 100 by using image data provided by the external device 400. Then, the display device 100 may transmit audio data provided by the external device 400 to the audio output device 300 through the electronic apparatus 200, and output an audio signal by using the audio output device 300. For example, the external device 400 may be various types of devices that can provide image data and audio data such as a Blue Ray disc player, a DVD player, a game machine, a PC, or a laptop, etc.

The electronic apparatus 200 may be a device that performs a function of connecting the audio output device 300 to the display device 100 (e.g.: a one connect (OC) box).

The electronic apparatus 200 may receive image data and audio data from the external device 400. Then, the electronic apparatus 200 may transmit the image data and the audio data received from the external device 400 to the display device 100. Here, the electronic apparatus 200 may communicate wirelessly with the display device 100. According to an embodiment, the electronic apparatus 200 may communicate with the display device 100 by using Wi-Fi.

The display device 100 may display an image by using the image data received from the electronic apparatus 200. Then, the display device 100 may transmit the audio data received from the electronic apparatus 200 to the electronic apparatus 200.

The electronic apparatus 200 may transmit the audio data received from the display device 100 to the audio output device 300. Here, the electronic apparatus 200 may communicate with the audio output device 300 via wire. For example, the electronic apparatus 200 may communicate with the audio output device 300 by using a high definition multimedia interface (HDMI). The electronic apparatus 200 and the audio output device 300 may be connected through an HDMI cable 10. The electronic apparatus 200 and the audio output device 300 may respectively include an HDMI-eARC port (or an HDMI-ARC port), and one end of the HDMI cable 10 may be connected to the HDMI-eARC port of the electronic apparatus 200, and the other end of the HDMI cable 10 may be connected to the HDMI-eARC port of the audio output device 300.

The audio output device 300 may output an audio signal by using the audio data received from the electronic apparatus 200. For example, the audio output device 300 may be a sound bar. However, the disclosure is not limited to this example, and the audio output device 300 may be implemented as an A/V receiver, a home theater system, etc.

As described above, the display device 100 may return the audio data received from the electronic apparatus 200 to the audio output device 300 through the electronic apparatus 200, and provide an audio signal to the user by using the audio output device 300. In other words, the display device 100 may provide an audio return channel (ARC) function.

Meanwhile, the display device 100 communicates with the electronic apparatus 200 wirelessly. Accordingly, in case a wireless network state between the display device 100 and the electronic apparatus 200 gets bad due to a reason such as interference, transmission of audio data by the display device 100 may be influenced.

The display device 100 according to the disclosure may transmit audio data in a different format to the electronic apparatus 200 according to a network state between the display device 100 and the electronic apparatus 200. Accordingly, an amount of audio data transmitted to the electronic apparatus 200 may be adjusted according to the network state, and thus an audio signal may be provided to the user through the audio output device 300 more stably.

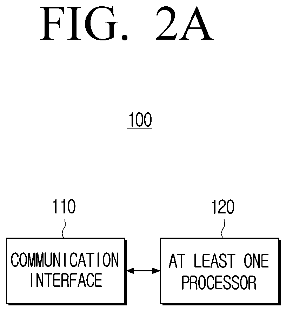

FIG. 2A is a block diagram for illustrating a configuration of a display device according to an embodiment of the disclosure.

Referring to FIG. 2A, the display device 100 includes a communication interface 110 and at least one processor 120.

The communication interface 110 includes circuitry. The communication interface 110 communicates with the electronic apparatus 200. The communication interface 110 may communicate with the electronic apparatus 200 wirelessly. The communication interface 110 may include a wireless communication module. The communication module may be implemented in a form of at least one hardware chip. The wireless communication module may be a module that communicates with the electronic apparatus 200 wirelessly. For example, the wireless communication module may include a Wi-Fi communication module. The communication interface 110 may communicate with the electronic apparatus 200 by using Wi-Fi communication.

The at least one processor 120 controls the overall operations of the display device 100. The at least one processor 120 may be connected with the components of the display device 100, and control the overall operations of the display device 100. For example, the at least one processor 120 may be connected with the communication interface 110 and control the display device 100. The at least one processor 120 may consist of one or a plurality of processors.

The at least one processor 120 may execute the operations of the display device 100 according to an embodiment of the disclosure by executing at least one instruction stored in the memory of the display device 100.

The at least one processor 120 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 120 may control one or a random combination of the other components of the display device 100, and perform an operation related to communication or data processing.

For example, the at least one processor 120 may perform the method according to an embodiment of the disclosure by executing the at least one instruction stored in the memory.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 120 may be implemented as a single core processor including one core, or may be implemented as one or more multicore processors including a plurality of cores (e.g., multicores of the same kind or multicores of different kinds). In case the at least one processor 120 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

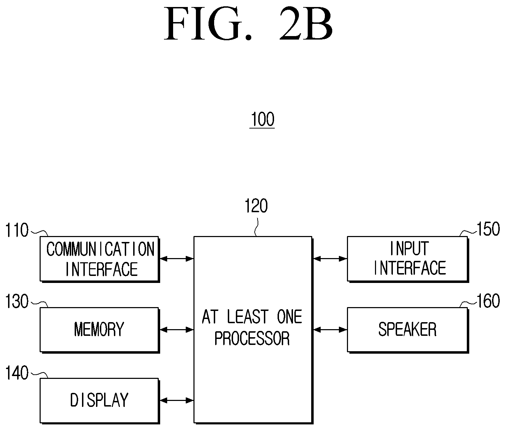

FIG. 2B is a block diagram for illustrating a configuration of a display device according to an embodiment of the disclosure.

Referring to FIG. 2B, the display device 100 may include a communication interface 110, at least one processor 120, memory 130, a display 140, an input interface 150, and a speaker 160. However, these components are merely exemplary ones, and in implementing the disclosure, it is obvious that some components among these components can be omitted, or new components can be added. Meanwhile, among the components illustrated in FIG. 2B, regarding the components explained in FIG. 2A, detailed explanation will be omitted.

The memory 130 may store data necessary for the display device 100 to operate according to an embodiment of the disclosure. For example, in the memory 130, at least one instruction may be stored. Also, in the memory 130, programs, applications, and data for driving of the display device 100 may be stored. The at least one processor 120 may execute the programs, the applications, or the instructions stored in the memory 130.

The memory 130 may be implemented as memory embedded in the display device 100 (e.g.: volatile memory, non-volatile memory, a hard drive, or a solid state drive, etc.), or implemented as memory that can be attached to or detached from the display device 100 (e.g.: a memory card, external memory, etc.) according to the use of the stored data.

The display 140 may display images. For example, the display 140 may be implemented as displays in various forms such as a liquid crystal display (LCD), an organic light emitting diodes (OLED) display, a light emitting diodes (LED) display, a micro LED display, a mini LED display, a quantum dot light emitting diodes (QLED) display, etc. Also, the display 110 may be implemented as a flat display, a curved display, a flexible display that can be folded and/or rolled, etc. The at least one processor 120 may process image data received through the communication interface 110, and display an image on the display 140.

The input interface 150 includes circuitry. The input interface 150 may receive a user input, and transmit the user input to the at least one processor 120. For example, the input interface 150 may receive various user inputs for setting or selecting various types of functions supported at the display device 100.

The input interface 150 may include various types of input devices.

According to an embodiment, the input interface 150 may include physical buttons. The physical buttons may include function keys or dial buttons. The physical buttons may also be implemented as one or more keys.

According to an embodiment, the input interface 150 may receive a user input by using a touch method. For example, the input interface 150 may be implemented as a touch screen that can perform the function of the display 140.

According to an embodiment, the input interface 150 may receive a user voice by using a microphone. The at least one processor 120 may perform a function corresponding to the user voice by using voice recognition. For example, the at least one processor 120 may convert the user voice into text data by using a speech to text (STT) function, obtain control command data based on the text data, and perform a function corresponding to the user voice based on the control command data. Depending on embodiments, the STT function may also be performed at an external server.

The speaker 160 may output audio signals. For example, the at least one processor 120 may output a notification sound or a notification message related to an operation of the display device 100, a response message corresponding to a user input, an audio signal corresponding to an image displayed on the display 140, etc. through the speaker 160.

Hereinafter, for the convenience of explanation, the at least one processor 120 will be referred to as the processor 120.

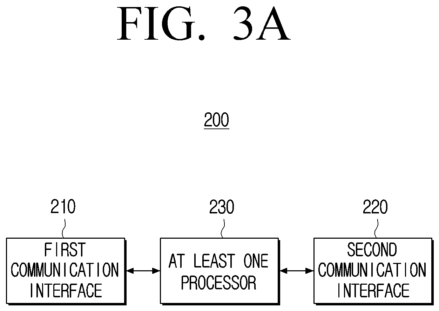

FIG. 3A is a block diagram for illustrating a configuration of an electronic apparatus according to an embodiment of the disclosure.

Referring to FIG. 3A, the electronic apparatus 200 includes a first communication interface 210, a second communication interface 220, and at least one processor 230.

The first communication interface 210 includes circuitry. The first communication interface 210 communicates with the audio output device 300. The first communication interface 210 may communicate with the audio output device 300 via wire. The first communication interface 210 may include a wired communication module. The communication module may be implemented in a form of at least one hardware chip. The wired communication module may be a module that communicates with the audio output device 300 via wire. For example, the wired communication module may include an HDMI communication module. The first communication interface 210 may communicate with the audio output device 300 by using HDMI communication.

The second communication interface 220 includes circuitry. The second communication interface 220 communicates with the display device 100. The second communication interface 220 may communicate with the display device 100 wirelessly. The second communication interface 220 may include a wireless communication module. The communication module may be implemented in a form of at least one hardware chip. The wireless communication module may be a module that communicates with the display device 100 wirelessly. For example, the wireless communication module may include a Wi-Fi communication module. The second communication interface 220 may communicate with the display device 110 by using Wi-Fi communication.

The at least one processor 230 controls the overall operations of the electronic apparatus 200. The at least one processor 230 may be connected with the components of the electronic apparatus 200, and control the overall operations of the electronic apparatus 200. For example, the at least one processor 230 may be connected with the first communication interface 210 and the second communication interface 220 and control the electronic apparatus 200. The at least one processor 230 may consist of one or a plurality of processors.

The at least one processor 230 may execute the operations of the electronic apparatus 200 according to an embodiment of the disclosure by executing at least one instruction stored in the memory of the electronic apparatus 200.

The at least one processor 230 may include one or more of a CPU, a GPU, an APU, a MIC, a DSP, an NPU, a hardware accelerator, or a machine learning accelerator. The at least one processor 230 may control one or a random combination of the other components of the electronic apparatus 200, and perform an operation related to communication or data processing.

For example, the at least one processor 230 may perform the method according to an embodiment of the disclosure by executing the at least one instruction stored in the memory.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 230 may be implemented as a single core processor including one core, or may be implemented as one or more multicore processors including a plurality of cores (e.g., multicores of the same kind or multicores of different kinds). In case the at least one processor 230 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

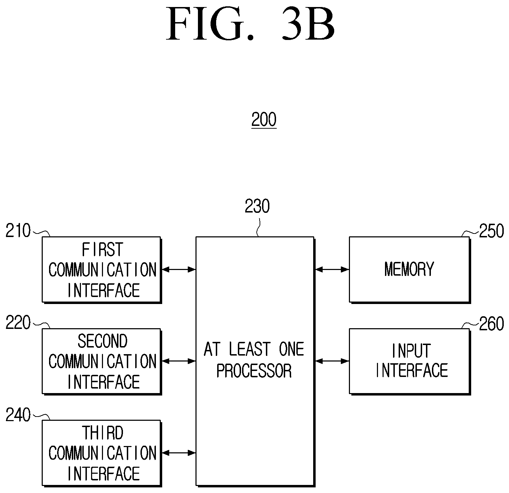

FIG. 3B is a block diagram for illustrating a configuration of an electronic apparatus according to an embodiment of the disclosure.

Referring to FIG. 3B, the electronic apparatus 200 may include a first communication interface 210, a second communication interface 220, at least one processor 230, a third communication interface 240, memory 250, and an input interface 260. However, these components are merely exemplary ones, and in implementing the disclosure, it is obvious that some components among these components can be omitted, or new components can be added. Meanwhile, among the components illustrated in FIG. 3B, regarding the components explained in FIG. 3A, detailed explanation will be omitted.

The third communication interface 240 includes circuitry. The third communication interface 240 communicates with the external device 400. The third communication interface 240 may communicate with the external device 400 via wire or wirelessly. The third communication interface 240 may include a wired communication module or a wireless communication module. The communication module may be implemented in a form of at least one hardware chip.

The wireless communication module may be a module that communicates with the external device 400 wirelessly. For example, the wireless communication module may include at least one of a Wi-Fi module, a Bluetooth module, or an infrared communication module. However, the disclosure is not limited to this example, and the wireless communication module may include communication modules that communicate according to various wireless communication standards such as Long Term Evolution (LTE), LTE Advanced (LTE-A), 4th Generation (4G), 5th Generation (5G), etc.

The wired communication module may be a module that communicates with the external device 400 via wire. For example, the wired communication module may include at least one communication module among an HDMI communication module, a universal serial bus (USB) communication module, a USB C-type communication module, and a display port (DP) communication module.

The memory 250 may store data necessary for the electronic apparatus 200 to operate according to an embodiment of the disclosure. For example, in the memory 250, at least one instruction may be stored. Also, in the memory 250, programs, applications, and data for driving of the electronic apparatus 200 may be stored. The at least one processor 230 may execute the programs, the applications, or the instructions stored in the memory 250.

The memory 250 may be implemented as memory embedded in the electronic apparatus 200 (e.g.: volatile memory, non-volatile memory, a hard drive, or a solid state drive, etc.), or implemented as memory that can be attached to or detached from the electronic apparatus 200 (e.g.: a memory card, external memory, etc.) according to the use of the stored data.

The input interface 260 includes circuitry. The input interface 260 may receive a user input, and transmit the user input to the at least one processor 230. For example, the input interface 260 may receive various user inputs for setting or selecting various types of functions supported at the electronic apparatus 200.

The input interface 260 may include various types of input devices.

According to an embodiment, the input interface 260 may include physical buttons. The physical buttons may include function keys or dial buttons. The physical buttons may also be implemented as one or more keys.

According to an embodiment, the input interface 260 may receive a user input by using a touch method. For example, the input interface 260 may be implemented as a touch screen that can perform the function of the display.

According to an embodiment, the input interface 260 may receive a user voice by using a microphone. The at least one processor 230 may perform a function corresponding to the user voice by using voice recognition. For example, the at least one processor 230 may convert the user voice into text data by using the STT function, obtain control command data based on the text data, and perform a function corresponding to the user voice based on the control command data. Depending on embodiments, the STT function may also be performed at an external server.

Hereinafter, for the convenience of explanation, the at least one processor 230 will be referred to as the processor 230.

The processor 230 may receive image data and audio data from the external device 400 through the third communication interface 240, and transmit the received image data and audio data to the display device 100 through the second communication interface 220.

The display device 100 may transmit the audio data received from the electronic apparatus 200 to the audio output device 300 through the electronic apparatus 200, for providing an ARC function. The audio output device 300 connected to the electronic apparatus 200 may output an audio signal based on the audio data received from the electronic apparatus 200.

The display device 100 may transmit audio data in a different format to the electronic apparatus 200 according to a network state between the display device 100 and the electronic apparatus 200, and more detailed explanation in this regard will be described below.

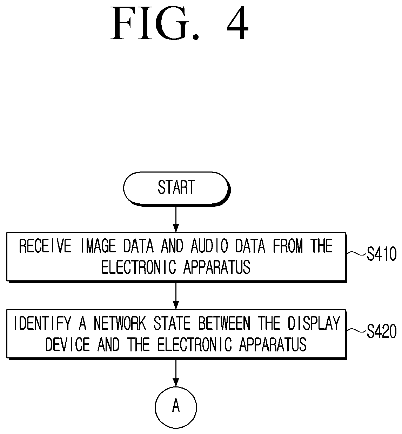

FIG. 4 is a diagram for illustrating a method for a display device to output an audio signal by using an audio output device according to an embodiment of the disclosure.

The processor 120 may receive data from the electronic apparatus 200 through the communication interface 110 in the step S410. The data may include image data and audio data. For example, the electronic apparatus 200 may receive image data and audio data from the external device 400, and transmit the image data and the audio data to the display device 100 in forms of packets.

The processor 120 may identify a network state between the display device 100 and the electronic apparatus 200 based on the data received from the electronic apparatus 200 through the communication interface 110 in the step S420.

The network state may be determined based on a packet loss rate between the display device 100 and the electronic apparatus 200.

For example, the processor 120 may identify whether a packet loss was generated by using an identifier of the packet received from the electronic apparatus 200. In case the identifier is a number, if the numbers of the packets that are sequentially received are not consecutive, the processor 120 may identify that a packet loss was generated, and identify the number of the lost packets. Then, the processor 120 may identify a packet loss rate based on the number of the lost packets and the number of the entire packets. However, this is merely an example, and the processor 120 may identify lost packets and a packet loss rate by using various known methods.

Then, if the packet loss rate is smaller than a threshold value, the processor 120 may identify that the network state is a first state, and if the packet loss rate is greater than or equal to the threshold value, the processor 120 may identify that the network state is a second state. Here, the first state may indicate that the quality of the network is good, and the second state may indicate that the quality of the network is not good.

In the aforementioned example, it was explained that the network state is measured based on a packet loss rate, but the disclosure is not limited to this example. For example, the processor 120 may determine the network state by using various indices such as a bandwidth, time delay, a jitter, etc.

The processor 120 may transmit audio data in a different format to the electronic apparatus 200 through the communication interface 110 according to the network state.

Here, the format of the audio data may be determined based on a type of a codec (e.g.: an audio codec) or a sampling rate for audio data.

For example, the processor 120 may receive packets from the electronic apparatus 200 through the communication interface 110, and in case a packet loss was generated, recover the lost packets by using a recovery algorithm for a packet loss.

Then, the processor 120 may obtain audio data from the packets. Here, the audio data may include compressed audio data or uncompressed audio data. If the audio data is compressed audio data, the processor 120 may identify the format of the compressed audio data. Here, identifying the format of the compressed audio data may include identifying a codec used in compression of the audio data. Then, the processor 120 may obtain audio data by decoding the compressed audio data by using a codec corresponding to the identified format.

The processor 120 may identify a format corresponding to the network state between the display device 100 and the electronic apparatus 200, and transmit audio data having the identified format to the electronic apparatus 200 through the communication interface 110.

For example, the processor 120 may identify a codec corresponding to the network state between the display device 100 and the electronic apparatus 200, and generate compressed audio data by compressing (or encoding) audio data by using the identified codec. Depending on embodiments, if there is audio data generated in the display device 100, the processor 120 may mix the audio data received from the electronic apparatus 200 and the audio data generated in the display device 100, and compress the mixed audio data by using the codec corresponding to the network state.

Then, the processor 120 may transmit the compressed audio data to the electronic apparatus 200 through the communication interface 110.

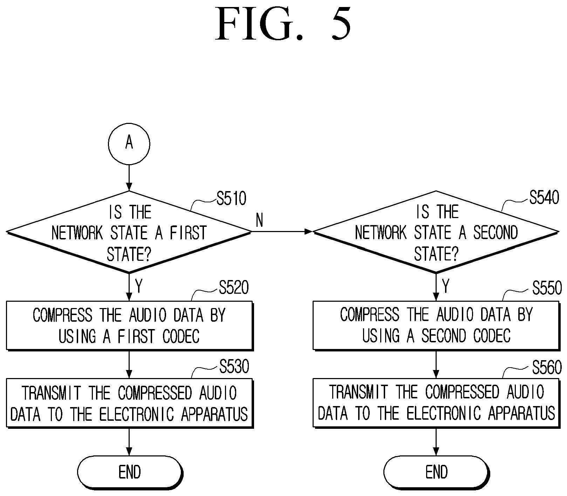

For example, referring to FIG. 5, if the network state is a first state in the step S510-Y, the processor 120 may generate compressed audio data by using a first codec in the step S520, and transmit the compressed audio data to the electronic apparatus 200 through the communication interface 110 in the step S530. Also, if the network state is a second state in the steps S510-N and S540-Y, the processor 120 may generate compressed audio data by using a second codec in the step S550, and transmit the compressed audio data to the electronic apparatus 200 through the communication interface 110 in the step S560.

Here, the first codec and the second codec may be codecs supported at the audio output device 300. Also, the first codec may be a codec that can provide audio of higher quality than the second codec. For example, the first codec may have higher data rate than the second codec. Also, the first codec may support a larger number of audio channels than the second codec. According to an embodiment, the first codec may be Metadata-enhanced Audio Transmission (MAT), and the second codec may be Dolby Digital Plus (DD+). The data rate of MAT may be 24.57Mbps, and the data rate of DD+ may be 2Mbps. However, the disclosure is not limited to this example, and the first codec and the second codec may be various types of codecs.

Also, the processor 120 may identify a sampling rate corresponding to the network state between the display device 100 and the electronic apparatus 200, and generate audio data based on the identified sampling date.

For example, the processor 120 may obtain audio data in an analog form by processing audio data received from the electronic apparatus 200. Then, the processor 120 may identify a sampling rate corresponding to the network state between the display device 100 and the electronic apparatus 200, and sample the audio data based on the identified sampling rate and generate audio data in a digital form (e.g.: audio data in a pulse code modulation (PCM) form). Depending on embodiments, in case there is audio data generated in the display device 100, the processor 120 may mix the audio data received from the electronic apparatus 200 and the audio data generated in the display device 100, and sample the mixed audio data based on the sampling rate and generate audio data.

Then, the processor 120 may transmit the generated audio data to the electronic apparatus 200 through the communication interface 110.

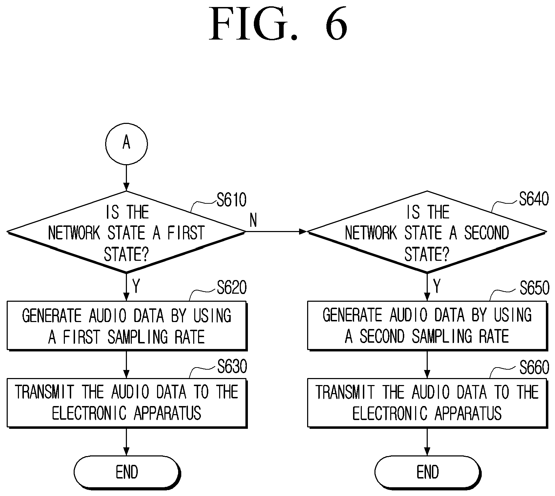

For example, referring to FIG. 6, if the network state is a first state in the step S610-Y, the processor 120 may generate audio data based on a first sampling rate in the step S620, and transmit the audio data to the electronic apparatus 200 through the communication interface 110 in the step S630. Also, if the network state is a second state in the steps S610-N and S640-Y, the processor 120 may generate audio data based on a second sampling rate in the step S650, and transmit the audio data to the electronic apparatus 200 through the communication interface 110 in the step S660.

Here, the second sampling rate may be lower than the first sampling rate. For example, the first sampling rate may be a high sampling rate, and the second sampling rate may be a low sampling rate. According to an embodiment, the first sampling rate may be 192kHz, and the second sampling rate may be 48kHz. However, the disclosure is not limited to this example, and the sampling rates may have various values.

Meanwhile, if audio data is received from the display device 100 through the second communication interface 220, the processor 230 may transmit the audio data to the audio output device 300 through the first communication interface 210.

Here, the format of the audio data received from the display device 100 may be determined based on the network state between the display device 100 and the electronic apparatus 200.

According to an embodiment, the audio data received from the display device 100 may include compressed audio data compressed by the first codec if the network state between the display device 100 and the electronic apparatus 200 is the first state, and may include compressed audio data compressed by the second codec if the network state between the display device 100 and the electronic apparatus 200 is the second state. Here, the first codec may be a codec that has a higher data rate than the second codec. According to an embodiment, the first codec may be MAT, and the second codec may be DD+.

According to an embodiment, the audio data received from the display device 100 may include audio data generated based on the first sampling rate if the network state between the display device 100 and the electronic apparatus 200 is the first state, and may include audio data generated based on the second sampling rate lower than the first sampling rate if the network state between the display device 100 and the electronic apparatus 200 is the second state. Here, the audio data may include uncompressed audio data generated based on the sampling rates.

If the format of the audio data received from the display device 100 is different from a format for transmitting the audio data to the audio output device 300, the processor 230 changes the format of the audio data, and transmits the audio data wherein the format was changed to the audio output device 300 through the first communication interface 210.

Here, the format of the audio data transmitted to the audio output device 300 may be set based on a user input, or set based on an audio processing method supported at the audio output device 300.

For example, the processor 230 may identify the format of the audio data transmitted to the audio output device 300 based on a user input.

According to an embodiment, the user may input a user input selecting a compression processing method by the first codec into the display device 100 in consideration of an audio processing method supported by the audio output device 300. When a user input selecting a compression processing method by the first codec is input through the input interface 150, the processor 120 may transmit information on the first codec selected according to the user input to the electronic apparatus 200 through the communication interface 110. The processor 230 may identify that the audio data compressed by the first codec is transmitted to the audio output device 300 based on the information received from the display device 100.

According to an embodiment, the user may input a user input selecting an uncompressed processing method into the display device 100 in consideration of an audio processing method supported by the audio output device 300. When a user input selecting an uncompressed processing method is input through the input interface 150, the processor 120 may transmit information on the uncompressed processing method selected according to the user input to the electronic apparatus 200 through the communication interface 110. The processor 230 may identify that uncompressed audio data is transmitted to the audio output device 300 based on the information received from the display device 100.

Also, the processor 230 may identify the format of the audio data transmitted to the audio output device 300 based on an audio processing method supported by the audio output device 300.

For example, the processor 230 may receive extended display identification data (EDID) of the audio output device 300 from the audio output device 300 through the first communication interface 210. Then, the processor 230 may identify an audio processing method supported by the audio output device 300 by using the EDID. For example, the processor 230 may identify whether the audio output device 300 supports the compressed processing method or the uncompressed processing method. Also, if the audio output device 300 supports the compressed processing method, the processor 230 may identify types of codecs supported by the audio output device 300 and a codec that can provide audio of the highest quality among the codecs supported by the audio output device 300 (e.g.: the first codec).

Then, if the audio output device 300 supports the compressed processing method, the processor 230 may identify that audio data compressed by the codec that can provide audio of the highest quality (e.g.: the first codec) is transmitted to the audio output device 300.

Also, if the audio output device 300 supports the uncompressed processing method, the processor 230 may identify that audio data generated based on a high sampling rate is transmitted to the audio output device 300.

Also, if the audio output device 300 supports the compressed processing method and the uncompressed processing method, the processor 230 may identify that audio data compressed by the codec that can provide audio of the highest quality (e.g.: the first codec) or audio data generated based on a high sampling rate is transmitted to the audio output device 300.

Then, the processor 230 may compare the format of the audio data received from the display device 100 and the format of the audio data transmitted to the audio output device 300, and transmit the audio data received from the display device 100 to the audio output device 300, or change the format of the audio data received from the display device 100 and transmit the audio data to the audio output device 300.

For example, a case wherein the format of the audio data transmitted to the audio output device 300 is a compressed format by the first codec is assumed.

If the audio data received from the display device 100 includes audio data compressed by the first codec, the processor 230 may transmit the compressed audio data received from the display device 100 to the audio output device 300 through the first communication interface 210.

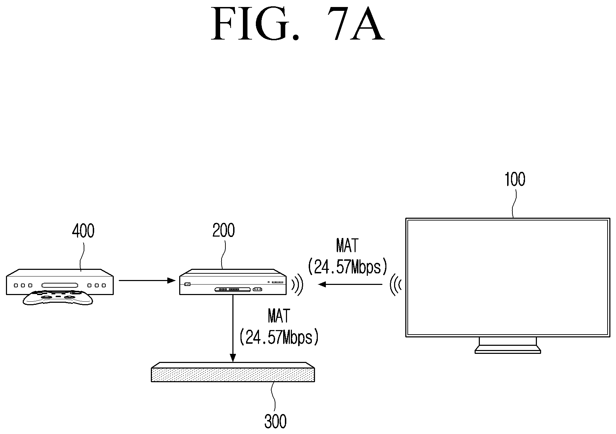

For example, referring to FIG. 7A, if the network state between the display device 100 and the electronic apparatus 200 is the first state, the display device 100 may compress audio data by using an MAT codec and transmit the audio data to the electronic apparatus 200. Here, the processor 230 may transmit the compressed audio data received from the display device 100 to the audio output device 300. In other words, the processor 230 may transmit the compressed audio data received from the display device 100 to the audio output device 300 without changing the format of the compressed audio data by using another codec.

If the audio data received from the display device 100 includes audio data compressed by the second codec, the processor 230 may obtain audio data by decoding the audio data compressed by the second codec, and compress the audio data by using the first codec, and transmit the audio data compressed by the first codec to the audio output device 300 through the first communication interface 210.

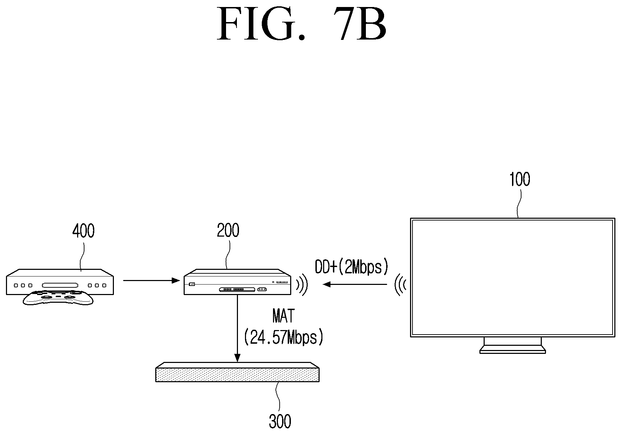

For example, referring to FIG. 7B, if the network state between the display device 100 and the electronic apparatus 200 is the second state, the display device 100 may compress audio data by using a DD+ codec and transmit the audio data to the electronic apparatus 200. Here, the processor 230 may change the format of the compressed audio data received from the display device 100 by using the MAT codec, and transmit the audio data compressed by using the MAT codec to the audio output device 300.

The audio output device 300 may receive the compressed audio data from the electronic apparatus 200, and identify a codec corresponding to the format of the compressed audio data (e.g.: the first codec). Then, the audio output device 300 may obtain audio data by decoding the compressed audio data by using the first codec, and output an audio signal by using the audio data.

As described above, according to the disclosure, if a wireless network state between the display device 100 and the electronic apparatus 200 is bad, the display device 100 may reduce the amount of audio data transmitted to the electronic apparatus 200 by compressing audio data by using a codec having a low data rate and transmitting the audio data to the electronic apparatus 200. When the audio data is received from the display device 100, the electronic apparatus 200 may change the format of the audio data by using a codec having a high data rate and transmit the audio data to the audio output device 300. In accordance thereto, according to the disclosure, in case the quality of a wireless network between the display device 100 and the electronic apparatus 200 is not good, an audio signal can be provided to the user stably by using the audio output device 300.

For example, a case wherein the format of the audio data transmitted to the audio output device 300 is an uncompressed format is assumed.

If the audio data received from the display device 100 includes audio data generated based on the first sampling rate, the processor 230 may transmit the audio data to the audio output device 300 through the first communication interface 210.

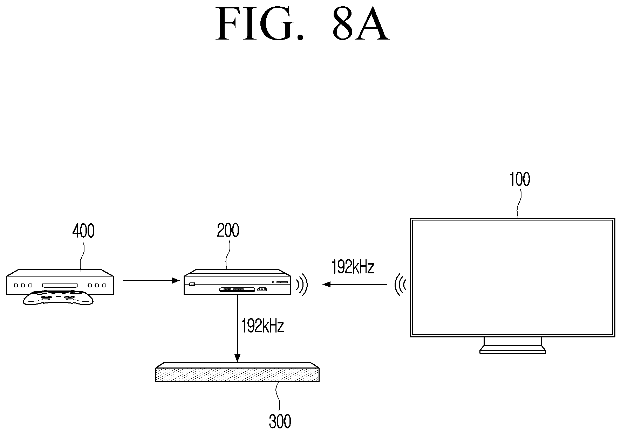

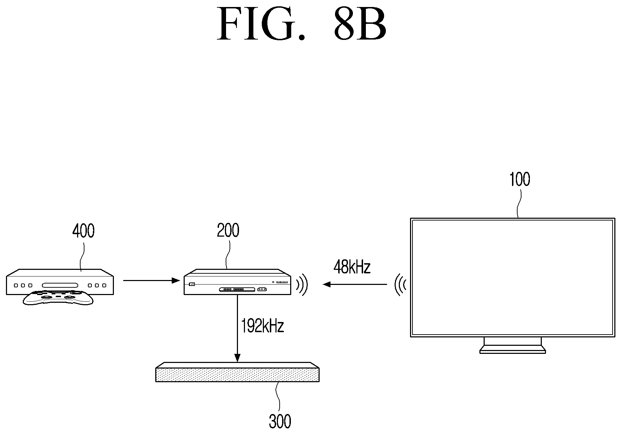

For example, referring to FIG. 8A, if the network state between the display device 100 and the electronic apparatus 200 is the first state, the display device 100 may transmit audio data generated based on a sampling rate of 192kHz to the electronic apparatus 200. Here, the processor 230 may transmit the audio data received from the display device 100 to the audio output device 300. In other words, the processor 230 may transmit the audio data received from the display device 100 to the audio output device 300 without changing the sampling rate of the audio data.

If the audio data received from the display device 100 includes audio data generated based on the second sampling rate, the processor 230 may obtain audio data generated based on the first sampling rate by sampling the audio data based on the first sampling rate. For example, the processor 230 may generate audio data by obtaining audio data in an analog form by processing the audio data received from the display device 100, and sampling the audio data based on the first sampling rate. In other words, the processor 230 may change the sampling rate of the audio data received from the display device 100. Then, the processor 230 may transmit the audio data generated based on the first sampling rate to the audio output device 300 through the first communication interface 210.

For example, referring to FIG. 7B, if the network state between the display device 100 and the electronic apparatus 200 is the second state, the display device 100 may transmit audio data generated based on a sampling rate of 48kHz to the electronic apparatus 200. The processor 230 may change the sampling rate of the audio data received from the display device 100 to 192kHz, and transmit the audio data generated based on the sampling rate of 192kHz to the audio output device 300.

The audio output device 300 may output an audio signal by processing the audio data received from the electronic apparatus 200.

As described above, if a wireless network state between the display device 100 and the electronic apparatus 200 is bad, the display device 100 according to the disclosure may reduce the amount of audio data transmitted to the electronic apparatus 200 by transmitting audio data generated by using a low sampling rate to the electronic apparatus 200. When the audio data is received from the display device 100, the electronic apparatus 200 may change the format of the audio data by using a high sampling rate and transmit the audio data to the audio output device 300. In accordance thereto, according to the disclosure, in case the quality of a wireless network between the display device 100 and the electronic apparatus 200 is not good, an audio signal can be provided to the user stably by using the audio output device 300.

Meanwhile, in the aforementioned example, it was explained that, if a network state between the display device 100 and the electronic apparatus 200 is the second state, the display device 100 reduces the amount of audio data transmitted to the electronic apparatus 200 by using a codec or a sampling rate, but the disclosure is not limited to this example.

For example, if the network state between the display device 100 and the electronic apparatus 200 is the first state, the processor 120 may transmit audio data compressed by the first codec or audio data generated based on the first sampling rate to the electronic apparatus 200 through the communication interface 110.

Also, if the network state between the display device 100 and the electronic apparatus 200 is the second state, the processor 120 may transmit a control command for the electronic apparatus 200 to transmit audio data received from the external device 400 to the audio output device 300 to the electronic apparatus 200 through the communication interface 110. Depending on embodiments, in case there is audio data generated in the display device 100, the processor 120 may output an audio signal through the speaker 160 by using the audio data generated in the display device 100.

Here, if the network state between the display device 100 and the electronic apparatus 200 is the second state, the processor 230 may receive a control command from the display device 100 through the second communication interface 220. Then, the processor 230 may transmit the audio data received from the external device 400 to the audio output device 300 through the first communication interface 210 based on the control command. Here, the audio data received from the external device 400 may not be transmitted to the display device 100. Also, the processor 230 may transmit audio data compressed by using the first codec to the audio output device 300, or transmit audio data generated based on the first sampling rate to the audio output device 300. Like this, the electronic apparatus 200 may directly transmit audio data to the audio output device 300 not via the display device 100 (e.g.: a pass-through mode).

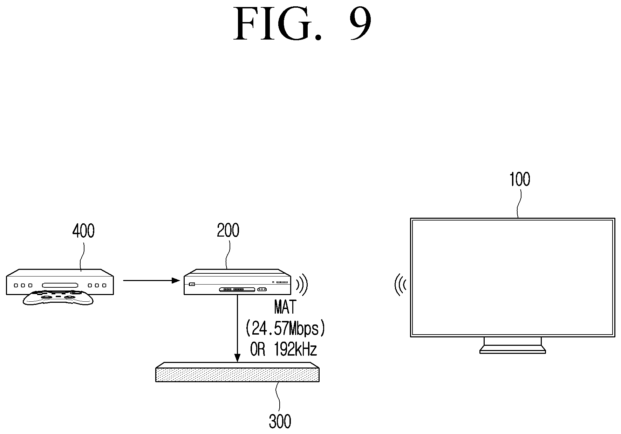

For example, referring to FIG. 9, if the network state between the display device 100 and the electronic apparatus 200 is the second state, the electronic apparatus 200 may compress the audio data received from the external device 400 by using the MAT codec and transmit the audio data to the audio output device 300, or sample the audio data received from the external device 400 based on a sampling rate of 192kHz and transmit the audio data to the audio output device 300. Accordingly, the audio data provided from the external device 400 may be provided to the audio output device 300 not via the display device 100.

Meanwhile, in the aforementioned example, it was explained that the external device 400 provides image data and audio data, but the disclosure is not limited to this example.

According to an embodiment, the display device 100 may receive image data and audio data from an external server that provides a streaming service. The display device 100 may display an image by using the image data received from the external server, and transmit the audio data received from the external server to the audio output device 300 through the electronic apparatus 200. Here, the display device 100 may transmit audio data in a different format to the electronic apparatus 200 according to a network state between the display device 100 and the electronic apparatus 200. Then, the electronic apparatus 200 may transmit the audio data received from the display device 100 to the audio output device 300 based on the format of the audio data received from the display device 100 and the format of the audio data transmitted to the audio output device 300, or change the format of the audio data received from the display device 100 and transmit the audio data to the audio output device 300.

According to an embodiment, the electronic apparatus 200 may include a port connected to a coaxial cable (e.g.: a port for cable broadcasting, public broadcasting, satellite broadcasting, etc.), and the like. Also, the electronic apparatus 200 may receive image data and audio data regarding broadcasting through the port, and transmit the received image data and audio data to the display device 100. The display device 100 may display an image by using the image data received from the electronic apparatus 200, and transmit the audio data received from the electronic apparatus 200 to the audio output device 300 through the electronic apparatus 200. Here, the display device 100 may transmit audio data in a different format to the electronic apparatus 200 according to a network state between the display device 100 and the electronic apparatus 200. Then, the electronic apparatus 200 may transmit the audio data received from the display device 100 to the audio output device 300 based on the format of the audio data received from the display device 100 and the format of the audio data transmitted to the audio output device 300, or change the format of the audio data received from the display device 100 and transmit the audio data to the audio output device 300.

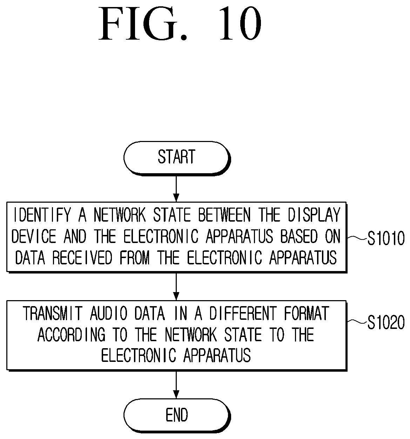

FIG. 10 is a flow chart for illustrating a method of transmitting audio data of a display device according to an embodiment of the disclosure.

A network state between a display device and an electronic apparatus is identified based on data received from the electronic apparatus in the step S1010.

Audio data in a format that is different according to a network state is transmitted to the electronic apparatus in the step S1020. An audio output device connected to the electronic apparatus outputs an audio signal based on the audio data received from the electronic apparatus.

The network state may be determined based on a packet loss rate between the display device and the electronic apparatus. In the step S 1010, if the packet loss rate is smaller than a threshold value, it may be identified that the network state is a first state, and if the packet loss rate is greater than or equal to the threshold value, it may be identified that the network state is a second state.

The format of the audio data may be determined based on a type of a codec or a sampling rate for the audio data.

In the step S1020, if the network state is the first state, compressed audio data may be generated by using a first codec, and the compressed audio data may be transmitted to the electronic apparatus, and if the network state is the second state, compressed audio data may be generated by using a second codec, and the compressed audio data may be transmitted to the electronic apparatus. The second codec may be a codec having a lower data rate than the first codec.

In the step S1020, if the network state is the first state, audio data may be generated based on a first sampling rate, and the generated audio data may be transmitted to the electronic apparatus, and if the network state is the second state, audio data may be generated based on a second sampling rate lower than the first sampling rate, and the generated audio data may be transmitted to the electronic apparatus.

In the step S1020, if the network state is the first state, audio data compressed by using the first codec or audio data generated based on the first sampling rate may be transmitted to the electronic apparatus, and if the network state is the second state, a control command for the electronic apparatus to transmit audio data received from an external device to the audio output device may be transmitted to the electronic apparatus.

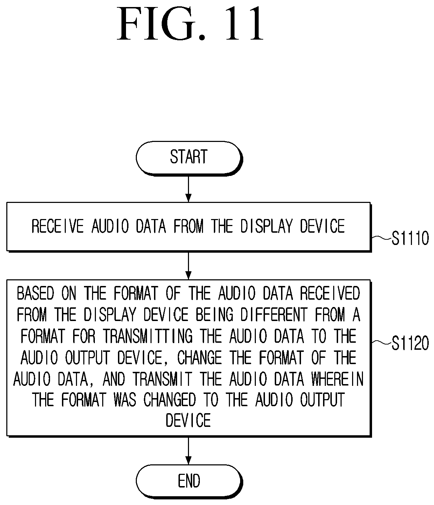

FIG. 11 is a flow chart for illustrating a method of transmitting audio data of an electronic apparatus according to an embodiment of the disclosure.

Audio data is received from a display device in the step S1110.

If the format of the audio data received from the display device is different from a format for transmitting the audio data to the audio output device, the format of the audio data is changed, and the audio data wherein the format was changed is transmitted to the audio output device in the step S1120.

In this case, the format of the audio data received from the display device is determined based on a network state between the display device and the electronic apparatus.

The audio data received from the display device may include compressed audio data compressed by a first codec if the network state between the display device and the electronic apparatus is a first state, and may include compressed audio data compressed by a second codec if the network state between the display device and the electronic apparatus is a second state. In this case, the first codec may be a codec that has a higher data rate than the second codec.

Also, the format of the audio data transmitted to the audio output device may be a compressed format by the first codec. In the step S1120, if the audio data received from the display device includes the audio data compressed by the first codec, the audio data compressed by the first codec may be transmitted to the audio output device, and if the audio data received from the display device includes the audio data compressed by the second codec, audio data may be obtained by decoding the audio data compressed by the second codec, the audio data may be compressed by using the first codec, and the audio data compressed by the first codec may be transmitted to the audio output device.

The first codec may be Metadata-enhanced Audio Transmission (MAT), and the second codec may be Dolby Digital Plus (DD+).

The audio data received from the display device may include audio data generated based on a first sampling rate if the network state between the display device and the electronic apparatus is a first state, and may include audio data generated based on a second sampling rate lower than the first sampling rate if the network state between the display device and the electronic apparatus is a second state.

In this case, the format of the audio data transmitted to the audio output device may be an uncompressed format. In the step S1120, if the audio data received from the display device includes audio data generated based on the first sampling rate, the audio data may be transmitted to the audio output device, and if the audio data received from the display device includes audio data generated based on the second sampling rate, audio data generated based on the first sampling rate may be obtained by sampling the audio data based on the first sampling rate, and the audio data generated based on the first sampling rate may be transmitted to the audio output device.

The format of the audio data transmitted to the audio output device may be set based on the user input, or set based on an audio processing method supported at the audio output device.

Also, if the network state between the display device and the electronic apparatus is a second state, a control command may be received from the display device, and audio data received from an external device may be transmitted to the audio output device based on the control command. In this case, the audio data received from the external device may not be transmitted to the display device.

Meanwhile, the aforementioned various embodiments may be implemented in a recording medium that can be read by a computer or an apparatus similar to a computer, by using software, hardware, or a combination thereof. In some cases, the embodiments described in this specification may be implemented as a processor itself. According to implementation by software, the embodiments such as processes and functions described in this specification may be implemented as separate software modules. Each of the software modules can perform one or more functions and operations described in this specification.

Meanwhile, computer instructions for performing processing operations of an electronic apparatus according to the aforementioned various embodiments of the disclosure may be stored in a non-transitory computer-readable medium. Computer instructions stored in such a non-transitory computer-readable medium make the processing operations at the modular display device 100 according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, ROM, and the like.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
a first communication interface;
a second communication interface for communicating with a display device wirelessly; and
at least one processor configured to, based on receiving audio data from the display device through the second communication interface, transmit the audio data to an audio output device through the first communication interface,
wherein a format of the audio data received from the display device is determined based on a network state between the display device and the electronic apparatus, and
the at least one processor is configured to:
based on the format of the audio data received from the display device being different from a format for transmitting the audio data to the audio output device, change the format of the audio data, and transmit the audio data wherein the format was changed to the audio output device through the first communication interface.

2. The electronic apparatus of claim 1,
wherein the audio data received from the display device comprises:
compressed audio data compressed by a first codec based on the network state between the display device and the electronic apparatus being a first state; and
compressed audio data compressed by a second codec based on the network state between the display device and the electronic apparatus being a second state, and
the first codec is a codec that has a higher data rate than the second codec.

3. The electronic apparatus of claim 2,
wherein the format of the audio data transmitted to the audio output device is a compressed format by the first codec, and
the at least one processor is configured to:
based on the audio data received from the display device including the audio data compressed by the first codec, transmit the audio data compressed by the first codec to the audio output device through the first communication interface, and
based on the audio data received from the display device including the audio data compressed by the second codec, obtain audio data by decoding the audio data compressed by the second codec, compress the audio data by using the first codec, and transmit the audio data compressed by the first codec to the audio output device through the first communication interface.

4. The electronic apparatus of claim 2,
wherein the first codec is Metadata-enhanced Audio Transmission (MAT), and
the second codec is Dolby Digital Plus (DD+).

5. The electronic apparatus of claim 1,
wherein the audio data received from the display device comprises:
audio data generated based on a first sampling rate based on the network state between the display device and the electronic apparatus being a first state; and
audio data generated based on a second sampling rate lower than the first sampling rate based on the network state between the display device and the electronic apparatus being a second state.

6. The electronic apparatus of claim 5,
wherein the format of the audio data transmitted to the audio output device is an uncompressed format, and
the at least one processor is configured to:
based on the audio data received from the display device including audio data generated based on the first sampling rate, transmit the audio data to the audio output device through the first communication interface, and
based on the audio data received from the display device including audio data generated based on the second sampling rate, obtain audio data generated based on the first sampling rate by sampling the audio data based on the first sampling rate, and transmit the audio data generated based on the first sampling rate to the audio output device through the first communication interface.

7. The electronic apparatus of claim 1,
wherein the format of the audio data transmitted to the audio output device is set based on the user input, or set based on an audio processing method supported at the audio output device.

8. The electronic apparatus of claim 1,
wherein the at least one processor is configured to:
based on the network state between the display device and the electronic apparatus being a second state, receive a control command from the display device through the second communication interface, and transmit audio data received from an external device to the audio output device through the first communication interface based on the control command, and
the audio data received from the external device is not transmitted to the display device.

9. A method of transmitting audio data of an electronic apparatus, the method comprising:
receiving audio data from a display device; and
based on a format of audio data received from the display device being different from a format for transmitting the audio data to an audio output device, changing the format of the audio data, and transmitting the audio data wherein the format was changed to the audio output device, and
the format of the audio data received from the display device is determined based on a network state between the display device and the electronic apparatus.

10. The audio data transmission method of claim 9,
wherein the audio data received from the display device comprises:
compressed audio data compressed by a first codec based on the network state between the display device and the electronic apparatus being a first state; and
compressed audio data compressed by a second codec based on the network state between the display device and the electronic apparatus being a second state, and
the first codec is a codec that has a higher data rate than the second codec.

11. The audio data transmission method of claim 10,
wherein the format of the audio data transmitted to the audio output device is a compressed format by the first codec, and
the transmitting comprises:
based on the audio data received from the display device including the audio data compressed by the first codec, transmitting the audio data compressed by the first codec to the audio output device; and
based on the audio data received from the display device including the audio data compressed by the second codec, obtaining audio data by decoding the audio data compressed by the second codec, compressing the audio data by using the first codec, and transmitting the audio data compressed by the first codec to the audio output device.

12. The audio data transmission method of claim 10,
wherein the first codec is Metadata-enhanced Audio Transmission (MAT), and
the second codec is Dolby Digital Plus (DD+).

13. The audio data transmission method of claim 9,
wherein the audio data received from the display device comprises:
audio data generated based on a first sampling rate based on the network state between the display device and the electronic apparatus being a first state; and
audio data generated based on a second sampling rate lower than the first sampling rate based on the network state between the display device and the electronic apparatus being a second state.

14. The audio data transmission method of claim 13,
wherein the format of the audio data transmitted to the audio output device is an uncompressed format, and
the transmitting comprises:
based on the audio data received from the display device including audio data generated based on the first sampling rate, transmitting the audio data to the audio output device; and
based on the audio data received from the display device including audio data generated based on the second sampling rate, obtaining audio data generated based on the first sampling rate by sampling the audio data based on the first sampling rate, and transmitting the audio data generated based on the first sampling rate to the audio output device.

15. The audio data transmission method of claim 9,
wherein the format of the audio data transmitted to the audio output device is set based on the user input, or set based on an audio processing method supported at the audio output device.
